# EUROPEAN PATENT APPLICATION

(11) **EP 4 636 622 A1**
(43) Date of publication of application: **22.10.2025**
(21) Application number: 23903088.5
(22) Date of filing: 12.10.2023
(51) Int. Cl.: G06F 21/55

(54) **ATTACK PATH PREDICTION METHOD, ATTACK PATH PREDICTION DEVICE, AND PROGRAM**

(30) Priority: 13.12.2022 US 202263432219 P; 20.04.2023 JP 2023069533
(71) Applicant: Panasonic Intellectual Property Management Co., Ltd., Kadoma-shi, Osaka 571-0057 (JP)
(72) Inventor: YANAGIDANI, Ryo, Kadoma-shi, Osaka 571-0057 (JP); HAGA, Tomoyuki, Kadoma-shi, Osaka 571-0057 (JP); UJIIE, Yoshihiro, Kadoma-shi, Osaka 571-0057 (JP); ADACHI, Takahiro, Kadoma-shi, Osaka 571-0057 (JP); HIRAISHI, Rikiya, Kadoma-shi, Osaka 571-0057 (JP)
(74) Representative: Grünecker Patent- und Rechtsanwälte PartG mbB
(86) International application number: PCT/JP2023/036971
(87) International publication number: WO 2024/127789

(57) **Abstract**

An attack path prediction method, which is an attack path prediction method of predicting an attack path of a cyberattacker, includes: obtaining incident information related to a cyberattack on a monitoring target vehicle (40) from a monitor who is monitoring the monitoring target vehicle (40); obtaining one or more items of threat information related to a past cyberattack on a vehicle, based on the incident information obtained (S202); obtaining, for each of the one or more items of threat information obtained, trend information indicating a degree of trend of the cyberattack (S204); and predicting the attack path of the cyberattack on the monitoring target vehicle (40), based on the one or more items of threat information and the trend information for each of the one or more items of threat information (S205).

## Description

### [Technical Field]

The present disclosure relates to an attack path prediction method, an attack path prediction device, and a program.

### [Background Art]

In recent years, it has become common to establish an organization called a security operation center (SOC) as countermeasures against rapidly increasing cyberattacks on IoT devices. The SOC monitors networks and devices 24 hours a day, 365 days a year, detects and analyzes cyberattacks, and provides advice on countermeasures.

A database that collects and accumulates an enormous amount of information on cyberattacks (open-source information, vulnerability information, malware analysis results, information on unauthorized IPs and domains, etc.) for analyzing cyberattacks is called cyber threat intelligence (CTI).

At present, a typical use of CTI is that a SOC operator manually creates a search query and obtains information related to a cyberattack concerned. The creation of search queries and the selection of necessary information requires advanced knowledge on security and a great deal of person-hours. Non Patent Literatures (NPLs) 1 and 2 disclose methods of determining, from predefined data, which data is most highly related to the cyberattack inputted. However, cyberattacks vary widely, and often do not match the predefined data.

### [Citation List]

### [Non Patent Literature]

[NPL 1] MITRE Corporation, Threat Report ATT & CK Mapping (TRAM), September, 30, 2021 [Retrieved on April 20, 2023], Internet <URL:https://ctid.mitre-engenuity.org/our-work/tram/>
[NPL 2] MITRE Corporation, Threat Report ATT & CK Mapping (TRAM), September 30, 2021 [Retrieved on April 20, 2023], Internet <URL:https://github.com/center-for-threat-informed-defense/tram >

### [Summary of Invention]

### [Technical Problem]

The operation of a SOC requires advanced knowledge on security and enormous operating costs. Also, a plurality of SOC operators present different analysis results in some cases.

It can be considered that, in the event of a cyberattack, variations in the analysis results among the operators were reduced, if the operators could obtain information on the attack path through which the attacker carried out the cyberattack, the extent to which the system has been breached up until the present point in time, the next action to be taken by the attacker, etc. Under the present circumstances, however, there is no way of obtaining such information.

In view of this, the present disclosure provides an attack path prediction method, an attack path prediction device, and a program capable of predicting the attack path of a cyberattack.

### [Solution to Problem]

An attack path prediction method according to an aspect of the present disclosure is an attack path prediction method of predicting an attack path of a cyberattacker, the attack path prediction method including: obtaining incident information related to a cyberattack on a monitoring target vehicle from a monitor who is monitoring the monitoring target vehicle; obtaining one or more items of threat information related to a past cyberattack on a vehicle, based on the incident information obtained; obtaining, for each of the one or more items of threat information obtained, trend information indicating a degree of trend of the cyberattack; and predicting the attack path of the cyberattack on the monitoring target vehicle, based on the one or more items of threat information and the trend information for each of the one or more items of threat information.

An attack path prediction device according to an aspect of the present disclosure is an attack path prediction device that predicts an attack path of a cyberattacker, the attack path prediction device including: a first obtainer that obtains incident information related to a cyberattack on a monitoring target vehicle from a monitor who is monitoring the monitoring target vehicle; a second obtainer that obtains one or more items of threat information related to a past cyberattack on a vehicle, based on the incident information obtained; and a third obtainer that obtains, for each of the one or more items of threat information obtained, trend information indicating a degree of trend of the cyberattack; and a predictor that predicts the attack path of the cyberattack on the monitoring target vehicle, based on the one or more items of threat information and the trend information for each of the one or more items of threat information.

A program according to an aspect of the present disclosure is a program for causing a computer to execute the foregoing attack path prediction method.

### [Advantageous Effects of Invention]

According to an aspect of the present disclosure, it is possible to realize an attack path prediction method and so forth capable of predicting the attack path of a cyberattack.

### [Brief Description of Drawings]

[FIG. 1]

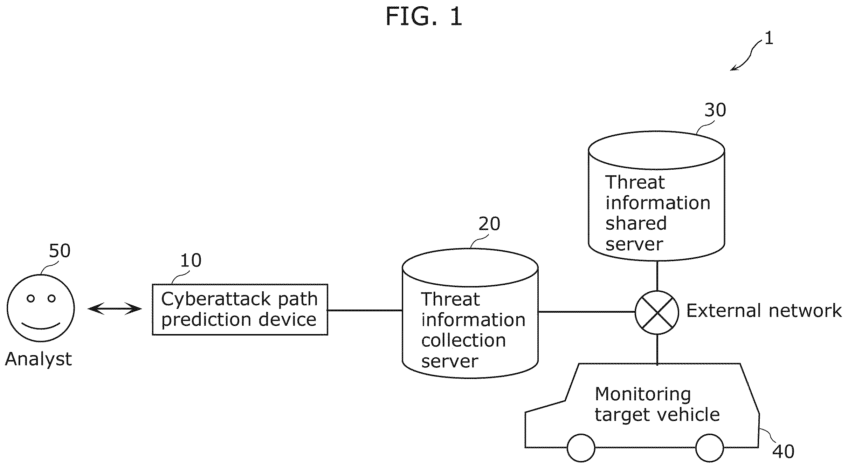

   FIG. 1 is a diagram showing the overall configuration of an attack path prediction system according to an embodiment.
[FIG. 2]

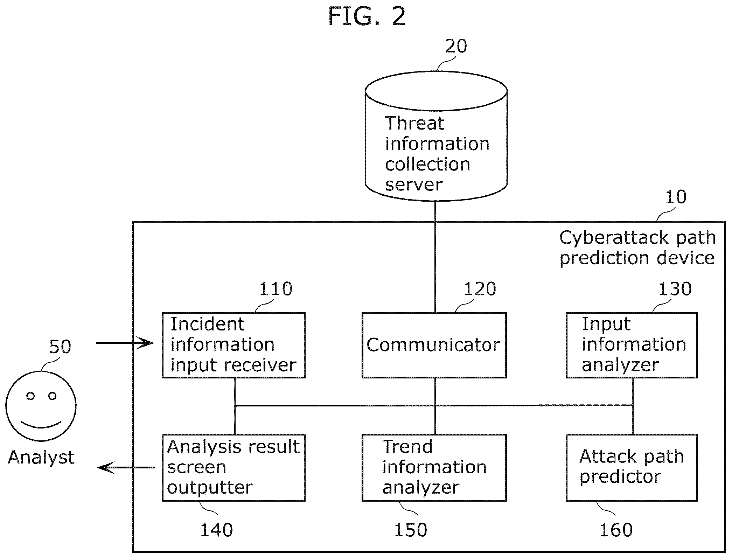

   FIG. 2 is a block diagram showing the functional configuration of a cyberattack path prediction device according to the embodiment.
[FIG. 3]

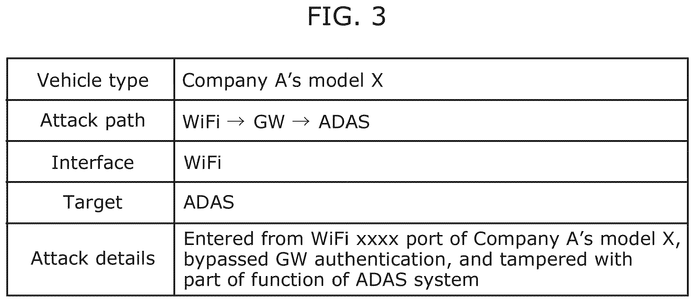

   FIG. 3 is a diagram showing an example of incident information inputted by an analyst to the cyberattack path prediction device according to the embodiment.
[FIG. 4]

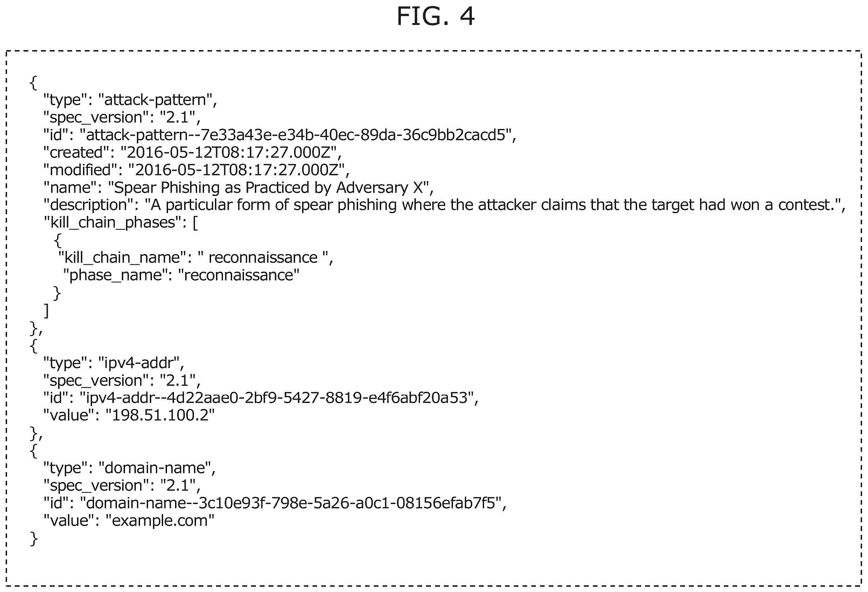

   FIG. 4 is a diagram showing an example of threat information stored in a threat information collection server and a threat information shared server according to the embodiment.
[FIG. 5]

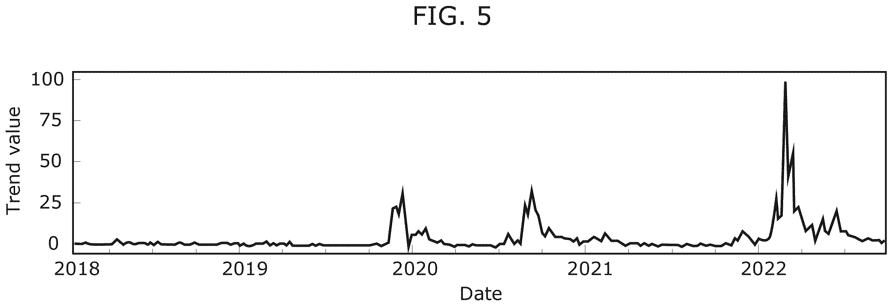

   FIG. 5 is a diagram showing an example of trend information used by the cyberattack path prediction device for trend information analysis according to the embodiment.
[FIG. 6]

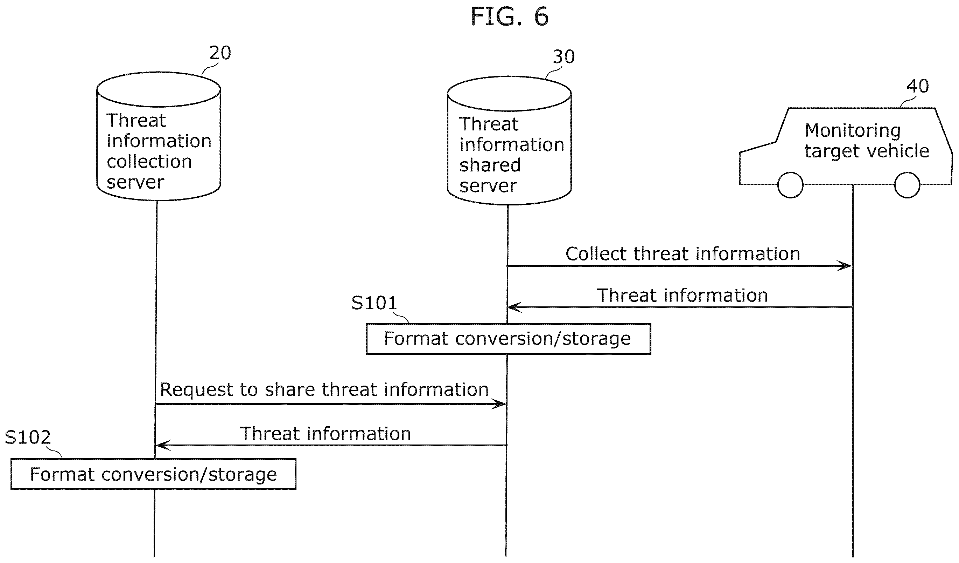

   FIG. 6 is a sequence diagram showing an operation of collecting threat information performed by the threat information collection server and the threat information shared server according to the embodiment.
[FIG. 7]

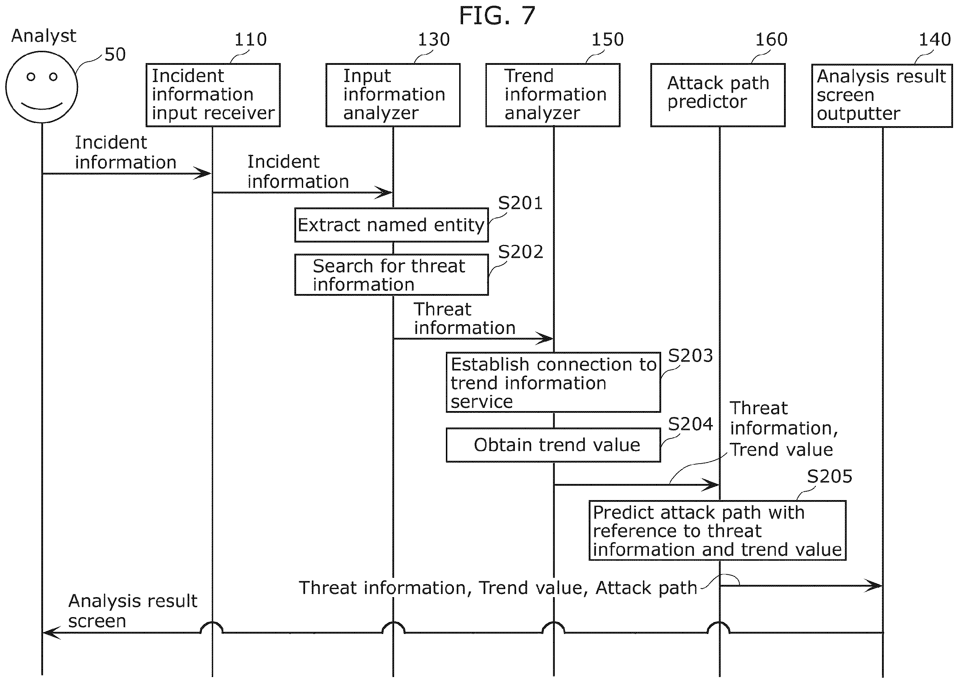

   FIG. 7 is a sequence diagram showing an operation of predicting the attack path performed by the attack path prediction device according to the embodiment.
[FIG. 8]

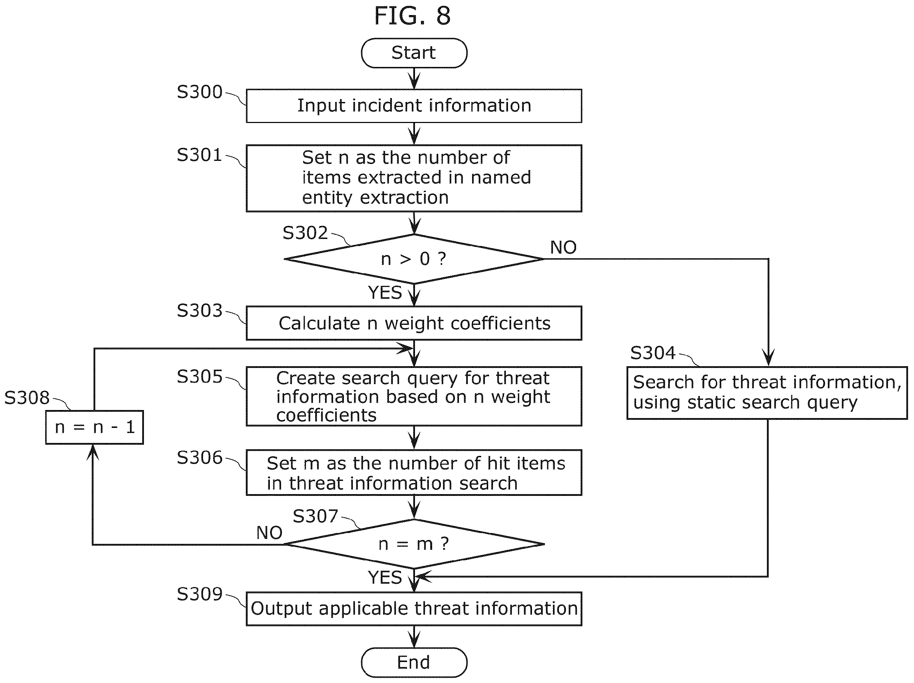

   FIG. 8 is a flowchart showing an operation of analyzing input information performed by an input information analyzer according to the embodiment.
[FIG. 9]

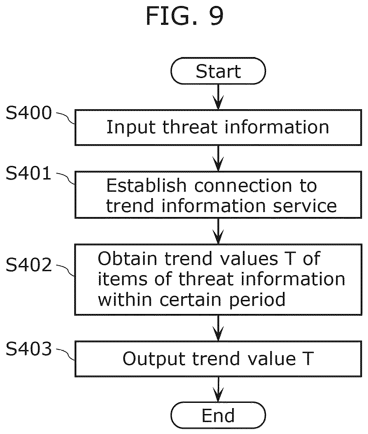

   FIG. 9 is a flowchart showing an operation of analyzing trend information performed by a trend information analyzer according to the embodiment.
[FIG. 10]

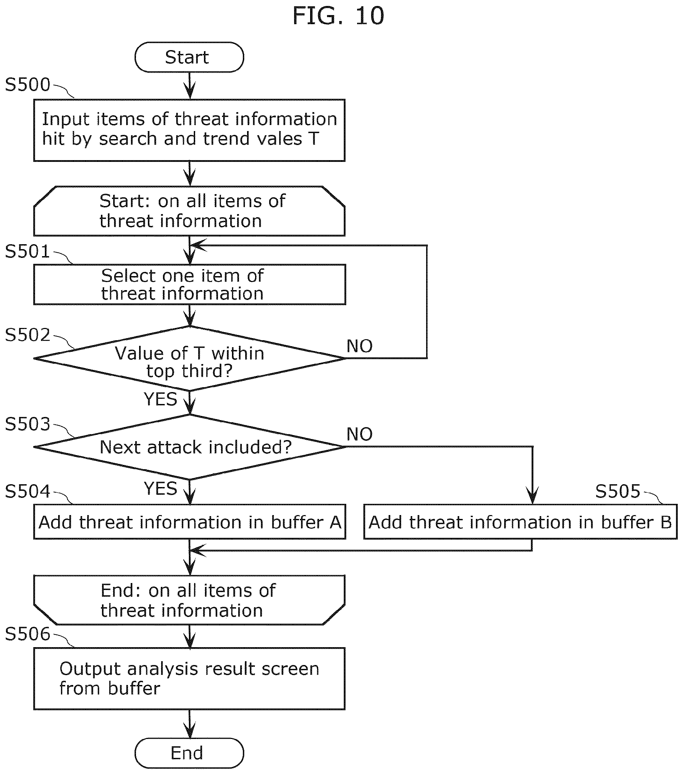

   FIG. 10 is a flowchart showing an operation of predicting the attack path performed by an attack path predictor according to the embodiment.
[FIG. 11]

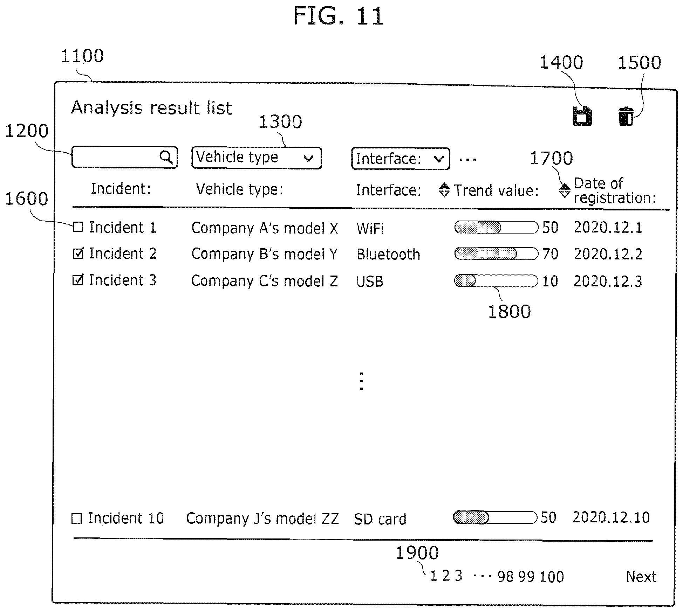

   FIG. 11 is a diagram showing an analysis result list screen according to the embodiment.
[FIG. 12]

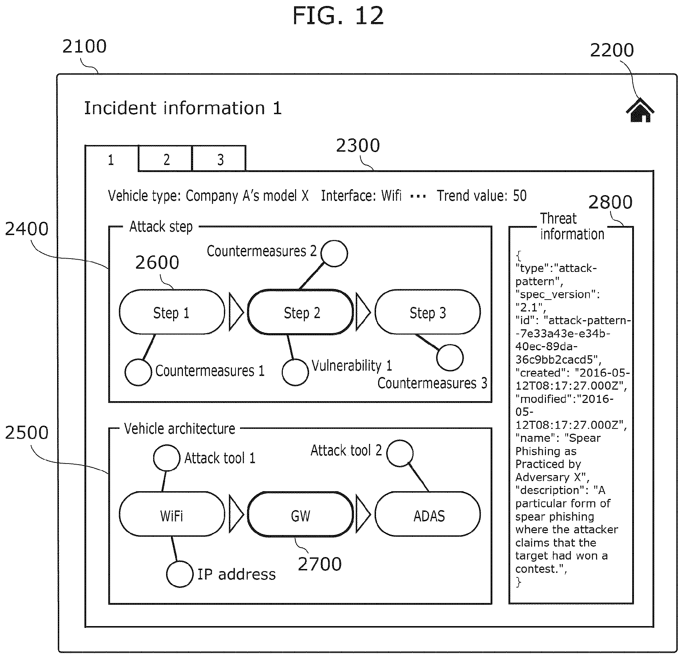

   FIG. 12 is a diagram showing a detailed analysis result screen according to the embodiment.

### [Description of Embodiment]

An attack path prediction method according to a first aspect of the present disclosure is an attack path prediction method of predicting an attack path of a cyberattacker, the attack path prediction method including: obtaining incident information related to a cyberattack on a monitoring target vehicle from a monitor who is monitoring the monitoring target vehicle; obtaining one or more items of threat information related to a past cyberattack on a vehicle, based on the incident information obtained; and predicting the attack path of the cyberattack on the monitoring target vehicle, based on the one or more items of threat information obtained, wherein the obtaining of the one or more items of threat information includes: creating a first search query for obtaining the one or more items of threat information, based on the incident information; creating a second search query, further based on the incident information, when a total number of the one or more items of threat information obtained is less than a predetermined number, the second search query being a search query for which a search condition is more relaxed than for the first search query; and obtaining the one or more items of threat information, using the second search query created.

With this, the search condition for the search query for obtaining threat information is relaxed, when the number of items of threat information that match the description of the incident information is less than the predetermined number. It is thus possible to increase the range of the search for threat information. Stated differently, it is possible to more reliably obtain threat information. Thus, according to the attack path prediction method, even when there is a little amount of threat information (e.g., when threat information is not present) that matches the description of the incident information, threat information similar to the description of the incident information is obtained. This enables the prediction of the attack path of the cyberattack.

Also, the attack path prediction method according to a second aspect of the present disclosure is, for example, the attack path prediction method according to the first aspect, wherein the obtaining of the one or more items of threat information may include: extracting one or more named entities included in the incident information; and creating the first search query, based on the one or more named entities extracted.

With this, it is possible to automatically create a search query, using the named entities.

Also, the attack path prediction method according to a third aspect of the present disclosure is, for example, the attack path prediction method according to the second aspect, wherein the incident information may include two or more classification items and character string information, and the obtaining of the one or more items of threat information may include: extracting the one or more named entities included in the character string information in the incident information; weighting each of the two or more classification items, based on the one or more named entities; and creating the second search query, based on a weighting value of each of the two or more classification items.

With this, the search query responsive to the weighting value is created. It is thus possible to obtain threat information that includes information related to a cyberattack that is more similar to the incident information. The use of such threat information enables the prediction of a more appropriate attack path. It is thus possible to predict a more appropriate attack path of the cyberattack.

Also, the attack path prediction method according to a fourth aspect of the present disclosure is, for example, the attack path prediction method according to the third aspect, wherein the obtaining of the one or more items of threat information may include: extracting one or more classification items excluding a classification item whose weighting value is smallest, among the two or more classification items; and creating the second search query, based on the one or more classification items extracted.

With this, the item whose weighting value is the lowest is excluded in relaxing the search condition for the search query. It is thus possible to obtain threat information that is more similar to the incident information, even when the range of the search for threat information has been increased. This enables the prediction of a more appropriate attack path of the cyberattack.

Also, the attack path prediction method according to a fifth aspect of the present disclosure is, for example, the attack path prediction method according to the third aspect or the fourth aspect, wherein the obtaining of the one or more items of threat information may include creating the first search query, based on a weighting value that is preliminarily set, when the character string information includes no named entity.

With this, it is possible to automatically create a search query, even when the incident information includes no named entity.

Also, the attack path prediction method according to a sixth aspect of the present disclosure is, for example, the attack path prediction method according to any one of the first aspect to the fifth aspect, wherein the two or more classification items may include at least two of: a vehicle type of the monitoring target vehicle; an attack path of the cyberattack on the monitoring target vehicle at a present point in time; an interface serving as an entry point of the cyberattack; or a device targeted by the cyberattack.

With this, it is possible to obtain threat information, of which at least two items among the vehicle type, the attack path, the interface, and the target are the same. The use of such threat information enables the prediction of a more appropriate attack path of the cyberattack.

Also, the attack path prediction method according to a seventh aspect of the present disclosure is, for example, the attack path prediction method according to any one of the first aspect to the sixth aspect, wherein the attack path prediction method may include obtaining, for each of the one or more items of threat information obtained, trend information indicating a degree of trend of the cyberattack, and the predicting of the attack path of the cyberattack may include predicting the attack path of the cyberattack on the monitoring target vehicle, further based on the trend information.

With this, it is possible to predict the attack path in consideration of the degree of trend of the cyberattack. Thus, when the cyberattack carried out on the monitoring target vehicle is a cyberattack in trend, for example, it is possible to more accurately predict the attack path of the cyberattack.

An attack path prediction device according to an eighth aspect of the present disclosure is an attack path prediction device that predicts an attack path of a cyberattacker, the attack path prediction device including: a first obtainer that obtains incident information related to a cyberattack on a monitoring target vehicle from a monitor who is monitoring the monitoring target vehicle; a second obtainer that obtains one or more items of threat information related to a past cyberattack on a vehicle, based on the incident information obtained; and a predictor that predicts the attack path of the cyberattack on the monitoring target vehicle, based on the one or more items of threat information obtained, wherein the second obtainer: creates a first search query for obtaining the one or more items of threat information, based on the incident information; creates a second search query, further based on the incident information, when a total number of the one or more items of threat information obtained is less than a predetermined number, the second search query being a search query for which a search condition is more relaxed than for the first search query; and obtains the one or more items of threat information, using the second search query created. Also, a program according to a ninth aspect of the present disclosure is a program for causing a computer to execute the attack path prediction method indicated in any one of the first aspect to the seventh aspect described above.

With this, it is possible to achieve the same effects as those of the foregoing attack path prediction method.

An attack path prediction method according to a tenth aspect of the present disclosure is an attack path prediction method of predicting an attack path of a cyberattacker, the attack path prediction method including: obtaining incident information related to a cyberattack on a monitoring target vehicle from a monitor who is monitoring the monitoring target vehicle; obtaining one or more items of threat information related to a past cyberattack on a vehicle, based on the incident information obtained; obtaining, for each of the one or more items of threat information obtained, trend information indicating a degree of trend of the cyberattack; and predicting the attack path of the cyberattack on the monitoring target vehicle, based on the one or more items of threat information and the trend information for each of the one or more items of threat information.

With this, it is possible to predict the attack path in consideration of the degree of trend of the cyberattack. Thus, according to the attack path prediction method, it is possible to predict the attack path of the cyberattack that takes into account the trend of the cyberattack.

Also, the attack path prediction method according to an eleventh aspect of the present disclosure is, for example, the attack path prediction method according to the tenth aspect, wherein the obtaining of the trend information may include: extracting one or more named entities included in each of the one or more items of threat information; obtaining named entity trend information of each of the one or more named entities extracted; and obtaining the trend information for the threat information, based on the named entity trend information of the each of the one or more named entities.

With this, it is possible to obtain the trend information of the threat information, using the named entity trend information of the named entity.

Also, the attack path prediction method according to a twelfth aspect of the present disclosure is, for example, the attack path prediction method according to the eleventh aspect, wherein the obtaining of the named entity trend information may include: obtaining a history of the named entity trend information of the each of the one or more named entities of a predetermined period; and obtaining the named entity trend information of the each of the one or more named entities, based on the history of the named entity trend information obtained.

With this, it is possible to obtain the trend information of the threat information, using the named entity trend information of the named entity of the predetermined period.

Also, the attack path prediction method according to a thirteenth aspect of the present disclosure is, for example, the attack path prediction method according to the eleventh aspect or the twelfth aspect, wherein the named entity trend information of each of the one or more named entities may include a total number of searches performed for the named entity.

With this, it is possible to obtain threat information that includes a named entity that has been searched for a greater number of times. Stated differently, it is possible to obtain threat information that is more similar to the incident information. The use of such threat information enables the prediction of a more appropriate attack path of the cyberattack.

Also, the attack path prediction method according to a fourteenth aspect of the present disclosure is, for example, the attack path prediction method according to any one of the tenth aspect to the thirteenth aspect, wherein the predicting of the attack path may include: extracting a predetermined number of items of threat information from the one or more items of threat information, based on the trend information for each of the one or more items of threat information; and predicting the attack path, based on the predetermined number of items of threat information extracted.

With this, threat information for predicting the attack path is selected in consideration of the trend. Thus, when the cyberattack carried out on the monitoring target vehicle is a cyberattack in trend, for example, it is possible to predict a more appropriate attack path of the cyberattack.

Also, the attack path prediction method according to a fifteenth aspect of the present disclosure is, for example, the attack path prediction method according to the fourteenth aspect, wherein the predicting of the attack path may include: determining, for each of the predetermined number of items of threat information extracted, whether the threat information includes attack continuity information indicating that the monitoring target vehicle is subjected to a next cyberattack; and predicting the attack path, based on at least one of: a corresponding one of the predetermined number of items of threat information that is determined to include the attack continuity information; or a corresponding one of the predetermined number of items of threat information that is determined not to include the attack continuity information.

With this, threat information determined to include the attack continuity information is used, thereby enabling a more appropriate prediction of the attack path (e.g., next attack). Also, threat information determined not to include the attack continuity information is used, thereby enabling the prediction of that no attack will be carried on the monitoring target vehicle or that the cyberattack has been completed.

An attack path prediction device according to a sixteenth aspect of the present disclosure is an attack path prediction device that predicts an attack path of a cyberattacker, the attack path prediction device including: a first obtainer that obtains incident information related to a cyberattack on a monitoring target vehicle from a monitor who is monitoring the monitoring target vehicle; a second obtainer that obtains one or more items of threat information related to a past cyberattack on a vehicle, based on the incident information obtained; and a third obtainer that obtains, for each of the one or more items of threat information obtained, trend information indicating a degree of trend of the cyberattack; and a predictor that predicts the attack path of the cyberattack on the monitoring target vehicle, based on the one or more items of threat information and the trend information for each of the one or more items of threat information. Also, a program according to a seventeenth aspect of the present disclosure is a program for causing a computer to execute the attack path prediction method indicated in any one of the tenth aspect to the fifteenth aspect described above.

With this, it is possible to achieve the same effects as those of the foregoing attack path prediction method.

These general and specific aspects may be implemented using a system, a method, an integrated circuit, a computer program, or a non-transitory recording medium such as a computer-readable CD-ROM, or any combination of systems, methods, integrated circuits, computer programs, or recording media. The program may be preliminarily stored in the recording medium, or may be provided to the recording medium via a wide area network including, for example, the Internet.

Hereinafter, a certain exemplary embodiment is described in greater detail with reference to the accompanying Drawings.

The exemplary embodiment described below shows a general or specific example. The numerical values, shapes, elements, the arrangement and connection of the elements, steps, the processing order of the steps etc. shown in the following exemplary embodiment are mere examples, and thus do not limit the scope of the present disclosure. Thus, among the elements in the following exemplary embodiment, those not recited in any one of the independent claims are described as optional elements.

Also, in the DESCRIPTION, the numerical values and the numerical ranges are not expressions that represent precise meanings only; these are expressions that also cover substantially equivalent ranges that are, for example, different by approximately several percent (or on the order of 10%).

Also, in the DESCRIPTION, the ordinal numbers such as "first" and "second" do not mean the number of elements or the order of the elements unless otherwise stated; the ordinal numbers are used to avoid confusion between elements of the same type and distinguish between the elements.

### [Embodiment]

With reference to FIG. 1 to FIG. 12, the following describes an attack path prediction method and so forth according to the present embodiment.

### [1. Configuration of Attack Path Prediction System]

First, with reference to FIG. 1 to FIG. 5, the configuration of the attack path prediction system is described that includes the cyberattack path prediction device according to the present embodiment. FIG. 1 is a diagram showing the overall configuration of attack path prediction system 1 according to the present embodiment. FIG. 2 is a block diagram showing the functional configuration of cyberattack path prediction device 10 according to the present embodiment.

As shown in FIG. 1, attack path prediction system 1 includes cyberattack path prediction device 10, threat information collection server 20, and threat information shared server 30. Attack path prediction system 1 may further include one or more monitoring target vehicles 40. Attack path prediction system 1 is an information processing system that predicts the attack path of a future cyberattack to be carried out on monitoring target vehicle 40 that is currently subjected to monitoring performed by analyst 50, when a cyberattack occurs in such monitoring target vehicle 40. Threat information collection server 20, threat information shared server 30, and monitoring target vehicle 40 are communicably connected to each other via an external network (e.g., the Internet). Analyst 50 is, for example, an SOC operator. Also, analyst 50 is an example of the monitor.

Cyberattack path prediction device 10 is connected to threat information collection server 20, and executes the processing of predicting the attack path of the cyberattack from information inputted by analyst 50. Cyberattack path prediction device 10 is an example of the attack path prediction device.

As shown in FIG. 2, cyberattack path prediction device 10 includes incident information input receiver 110, communicator 120, input information analyzer 130, analysis result screen outputter 140, trend information analyzer 150, and attack path predictor 160. Cyberattack path prediction device 10 includes, for example, a central processing unit (CPU) and memory. The functions of cyberattack path prediction device 10 are realized by means of the CPU executing a program stored in the memory.

Incident information input receiver 110 receives data input from analyst 50, stores each data in a buffer, and outputs the data to input information analyzer 130. Incident information input receiver 110 obtains incident information (see FIG. 3 to be described later) related to the cyberattack on monitoring target vehicle 40 from analyst 50 who is monitoring such monitoring target vehicle 40. Incident information input receiver 110 is configured, for example, including a user interface such as a button and a mouse. Incident information input receiver 110 may receive data input in the form of, for example, voice, gesture, etc. Incident information input receiver 110 is an example of the first obtainer.

Communicator 120 is configured, including a communication circuit (communication module) for communicating with threat information collection server 20.

Input information analyzer 130 obtains data from incident information input receiver 110, performs named entity extraction, creates a search query from an extracted named entity, and transmits the created search query to threat information collection server 20 via communicator 120. Stated differently, input information analyzer 130 is capable of automatically creating a search query on the basis of the incident information. Also, input information analyzer 130 obtains search results for threat information (see FIG. 4 to be described later) from threat information collection server 20 via communicator 120, and outputs the obtained search results to trend information analyzer 150. The threat information includes, for example, information related to a cyberattack carried out in the past on a vehicle capable of communicating with threat information shared server 30. The threat information may also include, for example, information indicating the history of cyberattacks.

As described above, input information analyzer 130 obtains, as the search results, one or more items of threat information related to the past cyberattacks carried out on one or more vehicles, on the basis of the incident information obtained by incident information input receiver 110. The one or more vehicles are vehicles for which threat information is collected by threat information collection server 20 or threat information shared server 30. Monitoring target vehicle 40 may be included in such one or more vehicles. Also, the one or more vehicles may be, for example, a plurality of vehicles.

Input information analyzer 130 creates a first search query for obtaining one or more items of threat information, for example, on the basis of the incident information (e.g., each of a plurality of items (e.g., classification items) included in the incident information). When the number of the one or more items of threat information obtained is less than a predetermined number, input information analyzer 130 creates a second search query for which search conditions are more relaxed than for the first search query, further on the basis of the incident information, and obtains one or more items of threat information, using the created second search query. As described above, input information analyzer 130 may further have the function of relaxing conditions of a search query for obtaining threat information from threat information collection server 20. Input information analyzer 130 is an example of the second obtainer.

Analysis result screen outputter 140 obtains the analysis results from attack path predictor 160, generates an analysis result screen, and presents it to analyst 50. Analysis result screen outputter 140 is realized in the form of a display device such as a liquid crystal display, but may also be realized, for example, in the form of a sound output device that presents the analysis results in the form of voice, etc.

Trend information analyzer 150 obtains, from input information analyzer 130, the search results for threat information, obtains the applicable trend information (see FIG. 5 to be described later) from a trend information service via communicator 120, and outputs the obtained information to attack path predictor 160. Non-limiting examples of the trend information service include a service provided by an information search site such as Google Trends. The trend information is information on the threat information indicating the degree of trend of the cyberattack. The analysis results on the trend information include the results of calculating the degree to which such threat information is in trend. Trend information analyzer 150 is an example of the third obtainer.

Attack path predictor 160 obtains the search results for threat information and the analysis results on the trend information from trend information analyzer 150, and predicts the attack path of the cyberattack on monitoring target vehicle 40 on the basis of the search results for threat information and the analysis results on the trend information that have been obtained. Attack path predictor 160 predicts the attack path on the basis of a predetermined number of items of threat information whose scores (e.g., trend values) are ranked high in the trend information analysis, among the items of threat information included in the search results. Also, for example, attack path predictor 160 outputs, to analysis result screen outputter 140, information that is based on the predetermined number of items of threat information ranked high as the analysis results on the predicted path. For example, attack path predictor 160 may preferentially output, to analysis result screen outputter 140, up to three items of threat information whose scores are highest and which describe information on the next attack path, as the analysis results of the predicted path. Note that attack path predictor 160 is simply required to predict the attack path at least on the basis of the search results for threat information. Attack path predictor 160 is an example of the predictor.

Note that the next attack predicted by cyberattack path prediction device 10 may also be, for example, an attack that is assumed to be carried out after the elapse of several hours to several days from the previous attack.

With reference to FIG. 1 again, threat information collection server 20 stores information such as threat information used in the processing performed by cyberattack path prediction device 10. Threat information collection server 20 obtains such information from threat information shared server 30. Threat information collection server 20 may be, for example, a server managed by a business that manufactures or sells cyberattack path prediction device 10.

Threat information collection server 20 includes: a recording unit such as a hard disk or a semiconductor memory; a controller such as a CPU that controls, for example, the writing of information to the recording unit and the reading of information from the recording unit; and a communicator that includes a communication circuit (communication module) for communicating with cyberattack path prediction device 10 and threat information shared server 30.

Threat information shared server 30 obtains and stores log information, vulnerability information, etc. from monitoring target vehicle 40. Threat information shared server 30 is a server that opens information to public on, for example, the Internet. Threat information shared server 30 is also referred to as CTI. FIG. 1 shows an example in which single threat information shared server 30 is provided, but a plurality of threat information shared servers 30 are provided in some cases. In attack path prediction system 1, a plurality of threat information shared servers 30 that are managed, for example, by different businesses can be provided. In this case, information on monitoring target vehicle 40 stored in each of the plurality of threat information shared servers 30 may be, for example, partially common or may be different from each other.

Threat information shared server 30 includes: a recording unit such as a hard disk or a semiconductor memory; a controller such as a CPU that controls, for example, the writing of information to the recording unit and the reading of information from the recording unit; and a communicator that includes a communication circuit (communication module) for communicating with threat information collection server 20 and monitoring target vehicle 40.

Monitoring target vehicle 40 is a vehicle subjected to monitoring performed by analyst 50. Monitoring target vehicle 40 may be, for example, an automobile, a bus, or a motorbike, but may also be, for example, a train. Also, monitoring target vehicle 40 may be a vehicle capable of self-driving or may be a vehicle capable of manual driving.

Here, with reference to FIG. 3 to FIG. 5, information items of various types are described. FIG. 3 is a diagram showing an example of the incident information inputted by analyst 50 to cyberattack path prediction device 10 according to the present embodiment.

As shown in FIG. 3, the incident information includes vehicle type, attack path, interface, target, and attack details. Note that items are not limited to these, and thus it suffices if the incident information describes information that represents the incident. Also, the vehicle type, the attack path, the interface, and the target are examples of the classification items, and the attack details are an example of the character string information. The incident information includes: two or more classification items including at least two of the vehicle type, the attack path, the interface, and the target; and one or more items of character string information.

The vehicle type is the vehicle type of a vehicle subjected to a cyberattack. FIG. 3 shows "Company A's Model X" as an example of the vehicle type, but the present embodiment is not limited to this. The vehicle type may also be, for example, "Company B's Model Y".

The attack path is the order in which the vehicle architecture has been breached in the cyberattack. The attack path here indicates the order in which the cyberattack has been carried out up until the present point in time, and that there is a possibility that the cyberattack will continue in the future from advanced driver-assistance systems (ADAS) further to another electronic control unit (ECU). FIG. 3 shows an example in which WiFi (registered trademark, hereinafter the same), gateway (GW), and ADAS have been breached in stated order, but the present embodiment is not limited to this. Other possible examples include the order in which WiFi, GW, an ECU serving as an on-board diagnostics (OBD), and another ECU have been breached in stated order.

The interface, which forms the vehicle architecture, serves as the entrance for the cyberattack. The interface is the entry point (point of entry) for the cyberattack in monitoring target vehicle 40, and corresponds to, for example, any one of the plurality of ECUs included in monitoring target vehicle 40. Examples of such ECU assumed include an ECU for externally communicating with outside of the vehicle, an ECU having the gateway function, etc. FIG. 3 shows an example in which the interface is an ECU that communicates in accordance with the WiFi communication standard, but the present embodiment is not limited to this. Other examples of the interface include an ECU that communicates in accordance with the Bluetooth (registered trademark) communication standard, an electric vehicle (EV), an OBD, etc.

The target, which forms the vehicle architecture, is the focus of the cyberattack. The target is the result of the prediction performed by analyst 50. In FIG. 3, ADAS is shown as an example, but the present embodiment is not limited to this. Other examples of the target include an in-vehicle infotainment (IVI), a body ECU, a self-driving ECU, etc. Note that the target is based on the prediction performed by analyst 50, and the prediction performed by analyst 50 can be incorrect in some cases. Also, when the prediction of the target is difficult, analyst 50 may not input anything in the column for "Target".

The attack details are any character strings that represent the cyberattack. The attack details are, for example, a character string inputted by analyst 50.

The classification items are information for obtaining threat information from threat information collection server 20, and the attack details are information for setting a weight coefficient to each of the plurality of classification items. Note that the classification items may also include, for example, attack tool that indicates the tool used in the cyberattack.

FIG. 4 is a diagram showing an example of threat information stored in threat information collection server 20 and threat information shared server 30 according to the present embodiment.

Threat information is a document that describes, for example, the impact and the cause of an attack as analyzed by an analyzer from logs and communication information of the attack target vehicle, after the damage from the cyberattack on such vehicle is discovered. The threat information is described, for example, in accordance with the description format of structured threat information expression (STIX).

As shown in FIG. 4, in the structured threat information expression format STIX, information including, for example, the following items related to the cyberattack are described: the method of the attack; the method of taking countermeasures against the attack; the vulnerability of the attack target; the severity of the vulnerability; the date of discovery of the attack; information on the attacked vehicle; the tool used in the attack; the IP address of the attacker; and the domain name of the attacker.

In FIG. 4, the threat information describes the method of the attack, the IP address of the attacker, and the domain name of the attacker. The item "cyber kill chain" (kill_chain_phases), if described in the method of the attack, enables the prediction of the method of the next attack. It is possible, for example, to predict the attack path in the cyber kill chain.

FIG. 5 is a diagram showing an example of trend information used by cyberattack path prediction device 10 for trend information analysis according to the present embodiment.

As shown in FIG. 5, a trend value indicates the number of times a specific keyword is searched for on the Internet during a time period or time domain concerned, and that the higher the trend value, the more actively the keyword is used for the search. The trend value may include the number of searches the named entity concerned is searched for on, for example, a search site. The number of searches may be the number of searches performed across the world, or the number of searches performed in a predetermined country or a predetermined region.

FIG. 5 is a graph showing the trend values of a single specific keyword which are obtained by designating a specific country and time period. FIG. 5 shows an example in which the trend values for a specific malware in Japan from 2018 to 2022 are obtained.

The graph shown in FIG. 5 includes the trend values (the numbers of searches) of the named entity at a plurality of points in time during the predetermined period. The trend value for the named entity is obtained on the basis of the trend values at the plurality of points in time. The trend value for the named entity is obtained by, for example, averaging the trend values at the plurality of points in time. The trend value for the named entity is an example of the named entity trend information.

### [2. Operation of Attack Path Prediction System]

With reference to FIG. 6 to FIG. 12, the following describes the operation of the attack path prediction system having the foregoing configuration. First, with reference to FIG. 6, the operation of collecting threat information is described. FIG. 6 is a sequence diagram showing the operation of collecting threat information (attack path prediction method) performed by threat information collection server 20 and threat information shared server 30 according to the present embodiment.

(S101) Threat information shared server 30 collects information (threat information) analyzed from the vehicle logs, communication information, etc. from monitoring target vehicle 40, converts such information into the structured threat information description format STIX, and stores it. For example, threat information shared server 30 outputs, to monitoring target vehicle 40, a request to collect threat information to obtain the threat information from the vehicle, but the obtainment method is not limited to this. For example, threat information may be transmitted from monitoring target vehicle 40 to threat information shared server 30 at regular time intervals.

(S102) Threat information collection server 20 transmits, to threat information shared server 30, a request to share the structured threat information description format STIX collected from monitoring target vehicle 40 ("Request to share threat information" in FIG. 6), and performs format conversion such as labeling on the threat information, if necessary, and stores it. Threat information collection server 20 obtains threat information from one or more threat information shared servers 30 that store desired information, among a plurality of threat information shared servers 30. The process of step S102 may be performed at regular time intervals, or may be performed by, for example, an input from analyst 50.

Next, with reference to FIG. 7, the operation of predicting the attack path of the cyberattack is described. FIG. 7 is a sequence diagram showing the operation of predicting the attack path (attack path prediction method) performed by cyberattack path prediction device 10 according to the present embodiment.

(S201) Input information analyzer 130 obtains data (incident information) from incident information input receiver 110, and performs named entity extraction, using the obtained data. In step S201, one or more named entities included in the incident information are extracted. In the example shown in FIG. 3, for example, input information analyzer 130 extracts "Company A's model X" indicated in the attack details as a named entity corresponding to the vehicle type, extracts "WiFi", "GW" and "ADAS" as named entities corresponding to the attack path, and extracts "WiFi" as a named entity corresponding to the interface.

Note that the method of named entity extraction is not limited to a specific method, and thus, for example, a general learning model such as a bidirectional encoder representations from transformers (BERT) model may be used, or an originally created model may be used.

(S202) Input information analyzer 130 searches for threat information, using the named entities extracted in step S201. Input information analyzer 130 automatically creates a search query (an example of the first search query), using the named entities. Input information analyzer 130 transmits the created search query to threat information collection server 20 via communicator 120, and receives applicable threat information. The received threat information is outputted to trend information analyzer 150. The received threat information is an example of the one or more items of threat information. As described above, according to cyberattack path prediction device 10, a search query is automatically created. It is thus possible to collect, for example, threat information even when analyst 50 has no advanced knowledge on security.

(S203) Trend information analyzer 150 establishes connection to a trend information service to obtain trend information on the threat information obtained from input information analyzer 130. Trend information analyzer 150 communicates with, for example, a server that provides the trend information service, via communicator 120.

(S204) Trend information analyzer 150 obtains, from the trend information service, trend information (e.g., trend value) for the threat information obtained from input information analyzer 130. Trend information analyzer 150 outputs the threat information and the trend information to attack path predictor 160.

(S205) Attack path predictor 160 obtains the threat information and the trend information from trend information analyzer 150, and predicts the attack path, with reference to such obtained threat information and trend information. For example, in step S205, attack path predictor 160 preferentially outputs, to analysis result screen outputter 140, up to three items of threat information whose scores are highest in the analysis results on the trend information and in which information on the next attack is described, among the items of threat information, as the analysis results on the predicted path. Attack path predictor 160 outputs information indicating the threat information, the trend value, and the attack path as information to be displayed by analysis result screen outputter 140.

As described above, according to cyberattack path prediction device 10, it is possible to classify cyberattacks by pattern by analyst 50 simply performing a simple input (incident information) representing the characteristics of the cyberattack that has occurred in monitoring target vehicle 40, and to automatically retrieve the applicable threat information from threat information collection server 20, and predict the attack path and the next action that is likely to be taken by the attacker. As a result, even when analyst 50 has no knowledge on security, for example, it is possible for such analyst 50 to perform, in a short time period, a sophisticated incident analysis with an awareness on the actions of the attacker. This enables cyberattack path prediction device 10 to contribute to the reduction in the operating cost of the SOC and the improvement in the accuracy of incident analysis. This also contributes, for example, to the reduction in variations in the analysis results among analysts 50.

Next, with reference to FIG. 8, the processing performed by input information analyzer 130 is described. FIG. 8 is a flowchart showing the operation of analyzing input information (attack path prediction method) performed by input information analyzer 130 according to the present embodiment. FIG. 8 shows the details of the processes in steps S201 and S202 shown in FIG. 7.

(S300) Input information analyzer 130 obtains, from incident information input receiver 110, incident information, such as incident information shown in FIG. 3, as input data.

(S301) Input information analyzer 130 performs named entity extraction on the incident information, using, for example, the BERT model, and sets the number of items of extracted named entities to n. Input information analyzer 130 extracts named entities from the character string information included in the incident information. When named entities corresponding to the vehicle type, the attack target ("Target" shown in FIG. 3), and the attack tool are extracted from the incident information, for example, the number of items n is 3. The number of items n is the number of classification items from which the named entities are extracted. Note that a table in which named entities are associated with the classification items corresponding to such named entities may be stored in a recording unit (not shown), and input information analyzer 130 may calculate the number of items n using such table.

(S302) Input information analyzer 130 determines whether the number of extracted items n is greater than 0. When the number of items n is greater than 0 (Yes in step S302), input information analyzer 130 performs step S303. Meanwhile, when the number of items n is 0 or less (e.g., 0) (No in step S302), input information analyzer 130 performs step S304. Note that, "the number of items n is greater than 0" means that the incident information includes information for creating a search query for searching for threat information.

(S303) Input information analyzer 130 calculates a weight coefficient (weighting value) for each of the n classification items. An example of the calculation method is calculating the weight coefficient on the basis of the proportion of each of the classification items in the character string (e.g., "Attack details" shown in FIG. 3) included in the incident information. In this calculation method, for example, the number of named entities corresponding to each of the vehicle type, the attack target, and the attack tool in the character string is counted, and the number of named entities included in the classification item is calculated as a proportion in the total number of named entities. For example, a higher weight coefficient is set to a classification item with a high proportion than the weight for a classification item with a low proportion. When the proportions of the named entities corresponding to the vehicle type, the attack target, and the attack tool extracted from the incident information are 0.1, 0.2, and 0.3, respectively, these values may be used as the weight coefficients as they are. Note that the process in step S303 may be performed, for example, after "No" is presented in the determination in step S307. Also, the calculation method is not limited to the method described above.

(S304) When the incident information that has been inputted includes no named entity, input information analyzer 130 searches threat information collection server 20 for threat information, using a search query that is statically defined. Here, a statically created query is a query created on the basis of the default weight coefficient that is preliminarily defined. As described above, input information analyzer 130 automatically creates a search query, even when the incident information includes no named entity used for creating a search query. It can be said that, input information analyzer 130 creates the first search query on the basis of the weight coefficient that is preliminarily set, when the character string information includes no named entity. Note that the default weight coefficient that is preliminarily defined is stored in a recording unit (not shown). The default weight coefficient includes the weight coefficient of each of the classification items included in the incident information.

(S305) Input information analyzer 130 creates a search query (first search query) for threat information that is based on the n weight coefficients. For example, input information analyzer 130 automatically creates a search query by connecting all of the n classification items with AND condition. Assuming that the vehicle type = A, the attack target = B, and the attack tool = C, for example, the search query is as follows:
Vehicle type = A AND attack target = B AND attack tool = C

(S306) Input information analyzer 130 searches threat information collection server 20 for threat information, using the search query created in step S305, and sets the number of hit items to m. When threat information collection server 20 stores threat information that satisfies each of vehicle type = A, attack target = B, and attack tool = C, for example, the number of items m is 3. When threat information collection server 20 stores threat information that satisfies two of vehicle type = A, attack target = B, and attack tool = C, the number of items m is 2.

(S307) Input information analyzer 130 determines whether the number of items n = m. When n = m (Yes in S307), input information analyzer 130 performs step S309. Meanwhile, when n ≠ m (No in S307), input information analyzer 130 performs step S308.

(S308) Input information analyzer 130 excludes one classification item with the lowest priority from the search conditions, and decreases the value of the number of items n by one (n = n - 1). Then, input information analyzer 130 proceeds to step S305, and creates a new search query (second search query) on the basis of the classification items (one or more classification items) that results from decreasing the number of items n by one, and the weight coefficients of such classification items. Input information analyzer 130 creates a search query on the basis of, for example, the two classification items that results from excluding the classification item with the lowest weight coefficient among the three classification items, and the weight coefficients of such two classification items. As described above, input information analyzer 130 creates the second search query on the basis of the weight coefficients of two or more classification items included in the incident information. This results in the relaxation of the search conditions for threat information.

Note that an example has been described in which the value of the number of items n is decreased by one in step S308, but the present embodiment is not limited to this. For example, the value obtained by subtracting the number of hit items m in step S306 from the current number of items n may be subtracted from the number of items n (n = n - (n - m)). Stated differently, in step S308, the number of items n may serve as the number of hit items m in step S306.

(S309) Input information analyzer 130 obtains threat information that matches the search conditions from threat information collection server 20 via communicator 120, and outputs the obtained threat information (threat information applicable to the search query) to attack path predictor 160.

Next, with reference to FIG. 9, the processing performed by trend information analyzer 150 is described. FIG. 9 is a flowchart showing the operation of analyzing trend information (attack path prediction method) performed by trend information analyzer 150 according to the present embodiment.

(S400) Trend information analyzer 150 obtains the threat information outputted from input information analyzer 130. Trend information analyzer 150 also extracts a named entity included in the obtained threat information. The method of named entity extraction may be the same as the named entity extraction from the incident information.

(S401) Trend information analyzer 150 establishes connection to the trend information service via an external network. Trend information analyzer 150 communicates with, for example, the server that provides the trend information service, via communicator 120.

(S402) Trend information analyzer 150 averages the trend values of the threat information within a certain time period to obtain T. When the threat information describes three items of the name of malware, the name of the vehicle type, and the name of the attacked system (or attacked ECU), for example, trend information analyzer 150 obtains the trend values of these items. When the trend values of these items are taken as 50, 60, and 70, trend value T of such threat information is 60. As described above, trend information analyzer 150 obtains the trend information on each of one or more named entities included in the threat information, and obtains the trend information (trend value) for such threat information on the basis of the trend information on each of the one or more named entities (named entity trend information). The trend information on the threat information includes, but is not limited to, the trend value, but it is sufficient if the trend information includes information indicating the degree of trend.

(S403) Trend information analyzer 150 outputs trend value T obtained in step S402 to attack path predictor 160.

Next, with reference to FIG. 10, the processing performed by attack path predictor 160 is described. FIG. 10 is a flowchart showing the operation of predicting the attack path (attack path prediction method) performed by attack path predictor 160 according to the present embodiment. Note that the processes from steps S501 to S505 are performed on all items of threat information.

(S500) Attack path predictor 160 obtains the items of threat information that were hit by the search and their respective trend values T, which have been outputted from trend information analyzer 150. In step S500, it can be said that the items of threat information and their respective trend values T are inputted to attack path predictor 160.

(S501) Attack path predictor 160 selects one of the items of threat information that were hit by the search.

(S502) Attack path predictor 160 refers to trend value T of the threat information selected in step S501, and determines whether the magnitude of the value of trend value T is within the top third of trend values T of all items of threat information that were hit by the search. When determining that the magnitude is within the top third (Yes in S502), attack path predictor 160 performs step S503. Meanwhile, when determining that the magnitude is not within the top third (No in S502), attack path predictor 160 returns to step S501. Note that "top third" is an example, and thus may be set as appropriate by, for example, analyst 50. Step S503 is an example of extracting a predetermined number of items of threat information from the one or more items of threat information on the basis of the trend information.

(S503) Attack path predictor 160 refers to the cyber kill chain described in the threat information and checks whether such threat information includes the next attack (information on the next attack (an example of the attack continuity information)). It can be said, for example, that attack path predictor 160 determines, in step S503, whether the threat information includes the attack continuity information indicating that monitoring target vehicle 40 is subjected to the next cyberattack.

When the next attack is included (Yes in S503), attack path predictor 160 performs step S504. Meanwhile, when the next attack is not included (No in S503), attack path predictor 160 performs step S505. When the cyber kill chain of the threat information indicates "reconnaissance", for example, attack path predictor 160 searches for a phase of the cyber kill chain after reconnaissance, such as "weaponization" and "delivery" linked to such threat information. If found, attack path predictor 160 determines that the next attack is included.

(S504) Attack path predictor 160 adds and stores the threat information in buffer A (not shown) included in cyberattack path prediction device 10. The threat information stored in buffer A is an example of the threat information determined to include the attack continuity information.

(S505) Attack path predictor 160 adds and stores the threat information in buffer B (not shown) included in cyberattack path prediction device 10. The threat information stored in buffer B is an example of the threat information determined not to include the attack continuity information.

When determining that the next attack is included, attack path predictor 160 predicts that such next attack is the next attack to be carried out on monitoring target vehicle 40. When three items of threat information are stored in buffer A, for example, attack path predictor 160 may predict that the next attack included in such three items of threat information is the next attack to be carried out on monitoring target vehicle 40. Also, when three items of threat information are stored in buffer B, attack path predictor 160 may predict that there is no next attack to be carried out on monitoring target vehicle 40. As described above, attack path predictor 160 predicts the attack path of the cyberattack to be carried out on monitoring target vehicle 40 on the basis of the predetermined number of items of threat information.

Note that attack path predictor 160 is simply required to predict the attack path on the basis of threat information stored in at least one of buffer A or B.

(S506) Attack path predictor 160 outputs, to analysis result screen outputter 140, threat information preferentially from buffer A. When data is stored in buffer B, attack path predictor 160 outputs, to analysis result screen outputter 140, threat information in buffer B after outputting the threat information in buffer A. The items of threat information stored in buffers A and B are used for displaying attack step display part 2400, vehicle architecture display part 2500, and threat information display part 2800 shown in FIG. 12 to be described later.

Note that attack path predictor 160 is not limited to outputting the threat information to analysis result screen outputter 140 preferentially from buffer A, and thus may, for example, output the threat information to analysis result screen outputter 140 preferentially from one of buffers A and B that stores a larger number of data items. Also, attack path predictor 160 may not perform the determination in step S503. For example, attack path predictor 160 may output threat information to analysis result screen outputter 140 in descending order of the trend value, or may randomly output the top three items of threat information to analysis result screen outputter 140.

Next, with reference to FIG. 11 and FIG. 12, information displayed by analysis result screen outputter 140 is described. FIG. 11 is a diagram showing analysis result list screen 1100 according to the present embodiment.

As shown in FIG. 11, analysis result list screen 1100 is, for example, a web page displayed on a web application, and includes filtering part 1200, select part 1300, save part 1400, delete part 1500, check box part 1600, sort part 1700, trend value display part 1800, and page display part 1900.

Filtering part 1200 is a part (part of the screen) for performing filtering, when a character string is inputted, to cause only the analysis results including such character string to be displayed.

Select part 1300 is a part for filtering the items in response to the selection of the corresponding character string.

Save part 1400 is a part for saving analysis result list screen 1100 to, for example, a CSV file, by being pressed.

Delete part 1500 is a part for deleting an incident selected in check box part 1600, by being pressed.

Check box part 1600 is a part for collectively saving or deleting information that is selected by pressing save part 1400 or delete part 1500, after the incident is selected.

Sort part 1700 is a part for switching between ascending order and descending order by being pressed.

Trend value display part 1800 is a part for displaying the analysis results on the trend information of the incident concerned.

Page display part 1900 is a part for displaying the analysis results of a predetermined number of the subsequent items (e.g., next 10 items) by being pressed.

FIG. 12 is a diagram showing detailed analysis result screen 2100 according to the present embodiment.

As shown in FIG. 12, detailed analysis result screen 2100 is, for example, a web page displayed on a web application, and includes home display part 2200, analysis result display part 2300, attack step display part 2400, vehicle architecture display part 2500, object display parts 2600 and 2700, and threat information display part 2800.

Home display part 2200 is a part for returning to analysis result list screen 1100 by being pressed.

Analysis result display part 2300 is a part in which "1" is selected by default that indicates the threat information that is most highly related (e.g., weight coefficient or trend value) as a result of the analysis, and which displays the analysis results of each of "1", "2" or "3" in response to pressing of "1", "2" or "3".

Attack step display part 2400 is a part for displaying threat information for each attack step.

Vehicle architecture display part 2500 is a part for displaying threat information for each vehicle architecture.

Object display parts 2600 and 2700 are parts that show each object of threat information, and causes the threat information to be displayed on threat information display part 2800 by being pressed. The object displayed in bold indicates the current progress of the attack.

Threat information display part 2800 displays the threat information concerned, in response to pressing of object display part 2600 or 2700.

FIG. 12 shows that the attack step is at Step 2 and that the cyberattack has progressed to ADAS as a vehicle architecture in Step 2. It can be seen from such threat information that there is no next attack in Step 2. In this case, the first object in "Vehicle architecture" in Step 3 is subjected to the next attack.

The information shown in FIG. 11 or FIG. 12 is displayed to analyst 50, thereby assisting the prediction of the path performed by analyst 50. Such a display is considered to be effective particularly for analyst 50 with little experience.

### [Other Embodiments]

Cyberattack path prediction device 10 and so forth according to one or more aspects have been described above on the basis of the embodiment, but the present disclosure is not limited to such embodiment. The scope of the present disclosure also includes an embodiment achieved by making various modifications to the embodiment that can be conceived by those skilled in the art, and an embodiment achieved by combining elements in different embodiments, without departing from the essence of the present disclosure.

For example, the foregoing embodiment has described an example in which attack path prediction system 1 includes two servers, that is, threat information collection server 20 and threat information shared server 30. However, attack path prediction system 1 is simply required to include at least one of threat information collection server 20 or threat information shared server 30.

The foregoing embodiment has also described an example in which a trend value (numerical value) is obtained as the degree of trend of a named entity, but the present disclosure is not limited to this. For example, whether the named entity is in trend (determination result), the level of trend, such as low, medium, high, etc., may be obtained as the degree of trend.

Also, the cyberattack in the foregoing embodiment is causing an anomaly in the operation of a device included in a vehicle (e.g., an ECU) by exploiting a security vulnerability to leak or tamper with information. The cyberattack may be an attack carried out either via or not via a network. Non-limiting examples of the attack carried out not via a network include data writing that uses, for example, a universal serial bus (USB) memory.

Also, in the foregoing embodiment, each of the elements may be configured in the form of an exclusive hardware product, or may be realized by executing a software program suitable for the element. Each of the elements may be realized by means of a program executing unit, such as a CPU and a processor, reading and executing the software program recorded on a recording medium such as an HDD or a semiconductor memory.

Also, the order of executing the steps in the flowcharts is an example to specifically describe the present disclosure, and thus another order may be used. Also, one or more of such steps may be performed simultaneously (in parallel) with another step, or may not be executed.

Also, the division of the functional blocks in the block diagrams is an example, and thus a plurality of functional blocks may be realized in the form of a single functional block, a single functional block may be divided into a plurality of blocks, or one or more functions may be moved to another functional block. Also, the functions of a plurality of functional blocks having similar functions may be processed by single hardware or software in parallel or in a time-shared manner.

Also, the cyberattack path prediction device according to the foregoing embedment may be realized either in the form of a single device or a plurality of devices. When the cyberattack path prediction device is realized in the form of a plurality of devices, the elements included in such cyberattack path prediction device may be allocated to the plurality of devices in any manner. When the cyberattack path prediction device is realized in the form of a plurality of devices, a communication method used between such plurality of devices is not limited to a specific method, and thus may either be a wireless communication or a wired communication. Also, a combination of a wireless communication and a wired communication may be used between the devices.

Also, each of the elements described in the foregoing embodiment may be realized in the form of software, or typically in the form of an LSI that is an integrated circuit (IC). These may take the form of individual chips, or may be encapsulated into a single chip in part or in whole. Although LSI is described here as an example, a chip on which the elements are integrated can also be referred to as IC, system LSI, super LSI, or ultra LSI, depending on the degree of integration. Also, a technique of circuit integration is not limited to LSI. Each of the elements may thus be realized in the form of an exclusive circuit (general-purpose circuit that executes an exclusive program) or a general-purpose processor. A field programmable gate array (FPGA) that allows for programming after the manufacture of an LSI, or a reconfigurable processor that allows for reconfiguration of the connection and the settings of circuit cells inside an LSI may be employed. Further, when the progress in the semiconductor technology or another derivative technology provides a new IC technology that replaces LSI, such new technology may, of course, be employed to integrate the elements.

A system LSI is a super-multifunctional LSI that is manufactured by integrating a plurality of processing units onto a single chip. The system LSI is, more specifically, a computer system that is configured including, for example, a microprocessor, a read only memory (ROM), a random-access memory (RAM), etc. The ROM stores a computer program. The system LSI achieves its function by the microprocessor operating in accordance with the computer program.

An aspect of the present disclosure may also be a computer program for causing a computer to execute the characteristic steps included in the method shown in any one of FIG. 6 to FIG. 10 (e.g., attack path prediction method).

The program may also be, for example, a program to be executed by a computer. An aspect of the present disclosure may also be a non-transitory, computer-readable recording medium having recorded thereon such pogrom. Such program may be, for example, recorded in a recording medium to be distributed. Such distributed program may be, for example, installed in a device that includes another processor. It becomes then possible to cause such device to execute the foregoing processes by causing the processor to execute such program.

### [Industrial Applicability]

The present disclosure is usable, for example, as a prediction device that predicts the attack path of a cyberattack.

### [Reference Signs List]

1 attack path prediction system
10 cyberattack path prediction device (attack path prediction device)
20 threat information collection server
30 threat information shared server
40 monitoring target vehicle
50 analyst (monitor)
110 incident information input receiver (first obtainer)
120 communicator
130 input information analyzer (second obtainer)
140 analysis result screen outputter
150 trend information analyzer (third obtainer)
160 attack path predictor (predictor)
1100 analysis result list screen
1200 filtering part
1300 select part
1400 save part
1500 delete part
1600 check box part
1700 sort part
1800 trend value display part
1900 page display part
2100 detailed analysis result screen
2200 home display part
2300 analysis result display part
2400 attack step display part
2500 vehicle architecture display part
2600, 2700 object display part
2800 threat information display part

## Claims

1. An attack path prediction method of predicting an attack path of a cyberattacker, the attack path prediction method comprising:
obtaining incident information related to a cyberattack on a monitoring target vehicle from a monitor who is monitoring the monitoring target vehicle;
obtaining one or more items of threat information related to a past cyberattack on a vehicle, based on the incident information obtained;
obtaining, for each of the one or more items of threat information obtained, trend information indicating a degree of trend of the cyberattack; and
predicting the attack path of the cyberattack on the monitoring target vehicle, based on the one or more items of threat information and the trend information for each of the one or more items of threat information.

2. The attack path prediction method according to claim 1,
wherein the obtaining of the trend information includes:
extracting one or more named entities included in each of the one or more items of threat information;
obtaining named entity trend information of each of the one or more named entities extracted; and
obtaining the trend information for the threat information, based on the named entity trend information of the each of the one or more named entities.

3. The attack path prediction method according to claim 2,
wherein the obtaining of the named entity trend information includes:
obtaining a history of the named entity trend information of the each of the one or more named entities of a predetermined period; and
obtaining the named entity trend information of the each of the one or more named entities, based on the history of the named entity trend information obtained.

4. The attack path prediction method according to claim 2,
wherein the named entity trend information of each of the one or more named entities includes a total number of searches performed for the named entity.

5. The attack path prediction method according to any one of claims 1 to 4,
wherein the predicting of the attack path includes:
extracting a predetermined number of items of threat information from the one or more items of threat information, based on the trend information for each of the one or more items of threat information; and
predicting the attack path, based on the predetermined number of items of threat information extracted.

6. The attack path prediction method according to claim 5,
wherein the predicting of the attack path includes:
determining, for each of the predetermined number of items of threat information extracted, whether the threat information includes attack continuity information indicating that the monitoring target vehicle is subjected to a next cyberattack; and
predicting the attack path, based on at least one of: a corresponding one of the predetermined number of items of threat information that is determined to include the attack continuity information; or a corresponding one of the predetermined number of items of threat information that is determined not to include the attack continuity information.

7. An attack path prediction device that predicts an attack path of a cyberattacker, the attack path prediction device comprising:
a first obtainer that obtains incident information related to a cyberattack on a monitoring target vehicle from a monitor who is monitoring the monitoring target vehicle;
a second obtainer that obtains one or more items of threat information related to a past cyberattack on a vehicle, based on the incident information obtained; and
a third obtainer that obtains, for each of the one or more items of threat information obtained, trend information indicating a degree of trend of the cyberattack; and
a predictor that predicts the attack path of the cyberattack on the monitoring target vehicle, based on the one or more items of threat information and the trend information for each of the one or more items of threat information.

8. A program for causing a computer to execute the attack path prediction method according to any one of claims 1 to 4.
